(19) **Europäisches Patentamt / European Patent Office / Office européen des brevets**

(11) **EP 3 311 672 A1**

(12) **EUROPEAN PATENT APPLICATION**

(43) Date of publication:
**25.04.2018 Bulletin 2018/17**

(21) Application number: **16194860.9**

(22) Date of filing: **20.10.2016**

(51) Int Cl.:
*A23C 1/03* (2006.01)　　*A23C 1/04* (2006.01)
*A23C 1/12* (2006.01)　　*A23C 9/00* (2006.01)
*A23C 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Tetra Laval Holdings & Finance S.A.**
**1009 Pully (CH)**

(72) Inventor: **INNINGS, Fredrik**
**24745 TORNA HÄLLESTAD (SE)**

(74) Representative: **Tetra Pak - Patent Attorneys SE**
**AB Tetra Pak**
**Patent Department**
**Ruben Rausings gata**
**221 86 Lund (SE)**

(54) **A METHOD AND SYSTEM FOR PRODUCING MILK POWDER**

(57)　A method and system for producing milk powder from a milk product, comprising shearing (220) the milk product in a shear unit that is installed for decreasing the viscosity of the milk product, and drying (218) the milk product by removing water until milk powder is obtained.

```
200: supply milk product
        ↓
202: evaporate
        ↓
204: shear
        ↓
206: evaporate
        ↓
208: shear
        ↓
210: hold  ←→  220: shear
        ↓
212: shear
        ↓
214: pre-heat
        ↓
216: shear
        ↓
218: spray dry
```

Fig. 2

EP 3 311 672 A1

## Description

Technical Field

The present invention relates to a method and system for producing milk powder from a milk product, where water is removed by drying the milk product until milk powder is obtained.

Background Art

The viscosity of a product is a signifying parameter of a products appearance and of how the product will behave and be affected during processing of the product. Some processing steps, such as pumping, spray draying etc. will require more energy when performed on a product with higher viscosity than when performed on a product having a lower viscosity.

There are ways to affect the viscosity of a liquid or semi-liquid product permanently or temporarily, the most straightforward being dilution with a product having a lower viscosity, or heating the product. Within the field of the present disclosure attempts to lower the viscosity using ultrasound have also been developed.

The present disclosure, at least some aspects thereof, will comprise the utilization of viscosity reduction in connection to spray drying. Current techniques for viscosity reduction will in comparison incur increased energy consumption and/or increased complexity.

Summary

It is an object of the present invention to improve the current state of the art, and in particular to provide improved production of milk powder from a milk product. The milk product is typically any conventional liquid milk product that is commonly used for producing milk powder.

According to a first aspect a method for producing milk powder from a milk product is provided. The method comprises shearing the milk product in a shear unit that is installed for decreasing the viscosity of the milk product, and drying the milk product by removing water from the milk product until milk powder is obtained. In this context, the shear unit is a unit that is specifically dedicated for shearing the milk product. Thus, conventional pumps may not be seen as a "shear unit" if their main purpose is to pump, i.e. convey, the milk product. The shearing of the milk product causes the decrease of the viscosity of the milk product by virtue of ripping particles (such as proteins) in the milk product apart.

According to another aspect a system for producing milk powder from a milk product is provided. The system comprises a shear that is arranged to decrease the viscosity of the milk product, and a dryer that is arranged to remove water from the milk until milk powder is obtained.

The method may include a number of additional steps and features, as will be further described herein. The system may include the same features as the method, and includes devices and apparatuses that implement the various steps of the method.

Usually, proteins in the milk product aggregate and from "threads" after some time, which increases the viscosity of the milk product. Exposing the milk product to shear in accordance with the method or by using the system is then advantageous in that the shear rips the protein threads apart which thereby lower the viscosity. The milk product is after the shear supplied to the dryer relatively quick, typically within 3 minutes, for preventing that the protein aggregate and that the viscosity increases.

Other objectives, features, aspects and advantages of the method and system will appear from the following detailed description as well as from the drawings.

Brief Description of the Drawings

Embodiments of the invention will now be described, by way of example, with reference to the accompanying schematic drawings, in which

Fig. 1 is a schematic illustration of a system for producing milk powder from a milk product, and
Fig. 2 is a flow chart illustrating a method of producing milk powder.

Detailed Description

The method of the present disclosure will be described in the context of manufacturing of milk powder from a milk product. The milk product may be milk, whole milk or skim milk, and different types of baby food or infant formulas. The manufacturing of milk powder where milk is dried to a powder generally comprises two drying stages. A first step is evaporation of liquid where a first portion of water content is removed to generate a more concentrated milk product. A second step is spray drying where the concentrated milk product is atomized and dried to a powder.

The reason for using a two step process is that the spray dryer requires much more energy to remove water than the evaporator. It is therefore beneficial to remove as much water as possible in the evaporation step. Counteracting that benefit is the fact that when the amount of total solids (TS) increases, i.e. when the concentration of the milk product increases, then the viscosity increases as well. The viscosity will increase due to the mere concentration. In addition to that, a phenomenon referred to as age thickening will set in or at least be more pronounced. Age thickening for a milk product with TS content above 40 % causes changed flow behavior for the milk product after a period of time. Specifically, it appears that flow behavior of concentrated milk product differs with TS content and that the age thickening rate increases with increased TS content and with temperature.

The mechanism behind age thickening is not yet fully understood but it is believed that it is caused by increased interactions between milk proteins. Age thickening increases the viscosity of the milk product which causes problems in the manufacturing process, such as lower heat transfer in evaporators and heat exchangers and fouling in spray dryers. This has, for example, made it difficult for the industry to increase the total solids in the milk product from 50 % to 55 % in the spray step, which would have reduced the energy consumption by 20 %, or enabling a 20 % decrease of spray dryer size. The system and method for producing milk powder and described herein enable increased reduction in water content in the evaporation step by controlling the increase in viscosity.

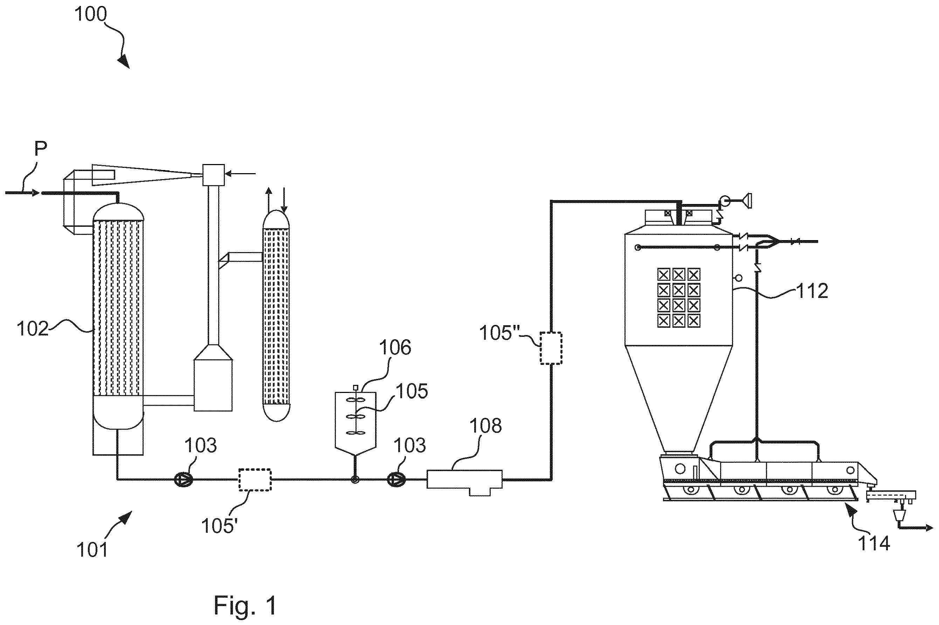

Fig.1 illustrates a schematic layout of a system 100 for production of milk powder. It should be noted that there are other layouts available and that the present example should not be construed as limiting. Upstream the system 100 a milk product may enter balance tanks to enable a controlled flow. Downstream the balance tanks a separator may be arranged in which the milk is separated into cream and skim milk. The cream follows a separate line and portions of it may be reintroduced to the skim milk in a standardization process. Milk powder having a fat content will generally have shorter shelf life than a milk powder with lower or no fat content, other parameters being constant. Surplus cream is guided out and is handled separately. Either skim milk or standardized milk (a controlled composition of skim milk and cream) may enter the system 100 in form of a milk product P, as shown in Fig. 1. The product entering the system 100 will simply be referred to as "milk product".

The system 100 comprises a fluid line 101 through which the milk product P is conveyed by means of a number of pumps 103 that are arranged in the fluid line 101. The milk enters a conventional evaporator 102 that is arranged in the fluid line 101 and comprises one or more evaporator steps where water is removed from the milk product. Several serially arranged evaporators may be used. Several different types of evaporators that might be used, and in the present example a so called falling film evaporator is used. There are also alternatives or complements to standard evaporators, such as devices operated on microfiltration or reverse osmosis, which may be used to remove water from a mixture in a concentration step similar to the evaporation step.

Downstream the evaporator 102 a holding tank 106 is arranged. The holding tank 106 is capable of holding an amount of the milk product, which is now in a more concentrated form with a higher content of solids than before entering the evaporator 102. The holding tank 106 is also referred to as a balance tank 106. More than one balance tank may be used. An agitator 105 is arranged in the balance tank 106. The milk product is typically held in the balance tank 106 before it is further conveyed to the spray dryer 112.

Following the balance tank 106 the fluid line 101 comprises a pre-heater 108 and after the pre-heater 108 the line 101 has a conventional spray dryer 112 that is arranged to remove water from the milk until milk powder is obtained. When a pre-heater is used the milk product is pre-heated before it is dried in the spray dryer. The temperature of the milk product is about 50 to 60 °C in the evaporator and prior to the pre-heater. After the pre-heater the milk product may have a temperature of about 70-90 °C. Before entering the spray dryer 112, i.e. before drying of the milk product is initiated, water has been removed from the milk product until the solid content of the milk product is at least 52 wt%. This removal of water has typically been done by the evaporator 102. Here, wt% refers to weight-percentage, where 52 wt% means that 52 % of the total weight of the milk product is solids, while 48 % of the total weight of the milk product is water.

In the spray dryer 112 water is removed from the milk product until milk powder is obtained. The powder leaving the spray dryer 112 may enter a retention chamber 114 which also may act as a final drying chamber and as a cooling chamber, where the milk powder may be further processed to obtain the desired properties.

The concentration of total solids in the milk product upstream the evaporator 102 may be 10-15 %, which may be increase to 30-35 % by adding an optional step of reverse osmosis, by arranging a reverse osmosis unit (not shown) upstream the evaporator 102. In the evaporator 102 water is removed and the total solids in the milk concentrate may reach about 50 % when the milk concentrate leaves the evaporator 102. This means that the milk product entering the balance tank 106 is a thick product having a high viscosity. The agitator 105 is arranged to prevent the concentrated milk from thickening even further, by shearing the milk product so that the viscosity of the milk product decreases. The shearing is accomplished by rotating the agitator 105. In the spray dryer 112 the total solids may increase to about 97 % or more, and when post processing is done in the chamber 114 the water content may be further adjusted.

In both the evaporator 102 and in the pre-heater 108 there is a heat exchange between the milk product and a surrounding medium, and in these apparatuses an increased viscosity may become an issue since it may hamper the heat transfer. There is of course a heat transfer in the spray dryer as well, where atomized fluid interacts with hot air.

It has been discovered that shearing the milk product reduces its viscosity, in particular when the milk product has a relatively higher concentration of solids. The shearing may, as described, be accomplished by the agitator 105 in the balance tank 106. The agitator 105 then acts as a shear unit. The shearing may also be accomplished by a shear unit that comprises a set up that has a rotor and a stator, such as a conventional high shear mixer. It is also possible to accomplish the shearing by a shear unit that has a gap through which the milk product is forced to provide the shearing, in a manner similar to the shearing that is accomplished by a conventional homogenizer unit. The shear unit, in any form it has, is arranged to decrease the viscosity of the milk product.

The shear unit, in the form e.g. high shear mixer, homogenizer or agitator, is installed for shearing the milk product to thereby decrease the viscosity of the milk product. The shear unit may be arranged as a shear unit 105', 105, 105" after the evaporator and before the spray dryer 112, or between two evaporation steps in the evaporator 102, as a shear unit 105' located after the evaporator 102 and before the balance tank 106, as a shear unit 105 that is located in the balance tank 106, or as a shear unit 105" that is located after the balance tank 106. More than one shear unit may be used, such as three units 105', 105 and 105" in the same line 101, making any combination of the above locations of shear units possible. In any case, the shear unit should be located before the spray dryer 112.

If the shear unit is placed before or between the steps in the evaporator 102, the efficiency of the evaporator 102 will increase so that higher flows can be used. Alternatively the evaporator 102 can be built smaller saving space and energy. If the shear unit is placed prior to the pre-heater 108 then the pre-heater 108 will become more efficient and can be made smaller and thereby save energy. When the shear unit is placed prior to the dryer 112, small droplets may be formed also at a very high tensile strength, which reduces the energy needed for properly drying the milk product.

The shear unit 105', 105, 105" is selected such that it applies a shear rate in the range of 200 s$^{-1}$ to 5000 s$^{-1}$. The shear unit may in on embodiment apply a shear rate in the range of 800 s$^{-1}$ to 2000 s$^{-1}$. The shear rate is the rate at which a progressive shearing deformation is applied to the milk product. Shear rate may be calculated according to known principles. For example, the shear rate for a fluid flowing between two parallel plates, one moving at a constant speed and the other one stationary (Couette flow), is defined by $\gamma = \frac{v}{h}$, where $\gamma$ is the shear rate, measured in reciprocal seconds, v is the velocity of the moving plate, measured in meters per second, and h is the distance between the two parallel plates, measured in meters.

For a shear rate of 1000 s$^{-1}$ the shear may be applied for a period of time of e.g. about 10 seconds. When the shear rate is in the range of 200 s$^{-1}$ to 5000 s$^{-1}$ the shear may be applied for a time period in the range of 2 seconds to 60 seconds, and when the shear rate is in the range of 800 s$^{-1}$ to 2000 s$^{-1}$ the shear may be applied for a time period in the range of 5 seconds to 20 seconds. Generally, the shear needs to be applied for a longer period of time when the shear rate is lower, and vice versa. The milk product may typically be subjected to shear that is applied until the viscosity of the milk product is reduced by 20% to 50%.

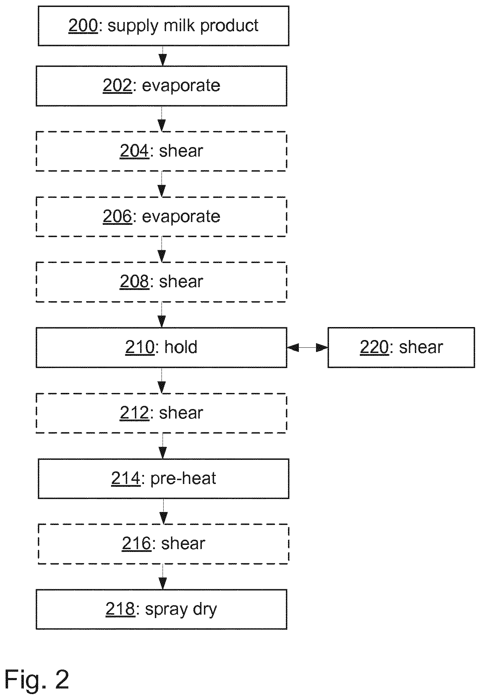

With reference to Fig. 2 a flow chart is illustrated, showing a method of producing milk powder as performed by the system 100.

In a first step the milk product is supplied 200 to a milk powder production system. This supply is performed according to any suitable, known techniques and principles. In a next step water is evaporated 202 from the milk product. The method may include an optional step of further evaporation 206. The further evaporation 206 may be preceded by shearing 204 the milk product, as well as may be succeeded by shearing 208 the milk product. After evaporation the milk product is typically held 210 in a balance tank. The milk product may be subjected to shearing 220 when it is held in the balance tank. Additionally or alternatively, the milk product is sheared 212 after being held in the balance tank. Next the milk product is pre-heated 214. After this the milk product may be sheared 216, and finally it is spray dried 218.

Any one of the steps of shearing 204, 208, 212, 216 and 22 may be used, either alone or in any combination, depending on if evaporation is done in multiple steps, if the a balance tank is used and if pre-heating is employed. At least one step of shearing should be done, preferably such that the shearing decreases the viscosity that the milk product has before being spray dried.

For the method, the evaporation 202, 206 is typically performed by one or more evaporators, such as the evaporator 102. The holding 210 is performed by the balance tank 106, the pre-heating 214 is performed by the pre-heater 108 while the spray drying 218 is performed by the spray dryer 112. The steps of shearing 204, 208, 212, 216, 220 is performed by the one or more shear units 105', 105, 105".

By using the present system and method it is possible to improve the processing efficiency for existing milk powder production lines, for example in form of reduced energy consumption and reduced down-time due to maintenance. It may also be possible to increase the amount of total solids after the evaporation step, which also results in energy savings since removal of water in the evaporator is less energy consuming than removal of water in the spray dryer.

From the description above follows that, although various embodiments of the invention have been described and shown, the invention is not restricted thereto, but may also be embodied in other ways within the scope of the subject-matter defined in the following claims.

**Claims**

1. A method for producing milk powder from a milk product, the method comprising shearing (220) the milk product in a shear unit (105', 105, 105") that is installed for decreasing the viscosity of the milk product, and
drying (218) the milk product by removing water from the milk product until milk powder is obtained.

2. The method of claim 1, comprising evaporating (202) water from the milk product, before the drying (218) of the milk product.

3. The method of claim 2, wherein the evaporating (202) comprises evaporating (202) water from the milk product in several evaporation steps (202, 206).

4. The method of claim 2, wherein the shearing (204) is performed after the evaporating (202) of water and before the drying (218) of the milk product.

5. The method of claim 3, wherein the shearing (204) is performed after a first evaporation step (202) and before a second evaporation step (206).

6. The method of any one of claims 1-5, comprising holding (210) the milk product in a balance tank (106), before the drying (218) of the milk product.

7. The method of claim 6, wherein the shearing (204) is performed
before (204, 208) holding (210) the milk product in the balance tank (106), or
when (220) holding (210) the milk product in a balance tank (106), or
after (212, 216) holding (210) the milk product in a balance tank (106), or any combination thereof.

8. The method of any one of claims 1-7, wherein the shearing (220) comprises applying a shear rate in the range of 200 s$^{-1}$ to 5000 s$^{-1}$.

9. The method of any one of claims 1-7, wherein the shearing (220) comprises applying a shear rate in the range of 800 s$^{-1}$ to 2000 s$^{-1}$.

10. The method of claim 8 or 9, wherein the shearing (220) is applied for a period of time of 2 seconds to 60 seconds.

11. The method of any one of claims 1-10, comprising removing water from the milk product until the solid content of the milk product is at least 52 wt% before the drying (218) of the milk product is initiated.

12. The method of any one of claims 1-11, wherein the shearing (220) is accomplished by a shear unit (3) that comprises a rotor and a stator that provide the shearing (220).

13. The method of any one of claims 1-12, wherein the shearing (220) is accomplished by a shear unit (3) that comprises a gap through which the milk product is forced to thereby provide the shearing (220).

14. The method of any one of claims 1-13, wherein the drying (218) of milk product is performed within less than 5 minutes from the shearing (220) of the milk product.

15. A system for producing milk powder from a milk product, the system comprising
a shear unit (105) arranged to decrease the viscosity of the milk product, and a dryer (112) arranged to remove water from the milk until milk powder is obtained.

P

100

102

101

103

105'

106

105

103

108

105"

112

114

**Fig. 1**

```
┌─────────────────────────────────┐
│   200: supply milk product      │
└─────────────────────────────────┘
                 │
                 ▼
┌─────────────────────────────────┐
│        202: evaporate           │
└─────────────────────────────────┘
                 │
                 ▼
┌ ─ ─ ─ ─ ─ ─ ─ ─ ─ ─ ─ ─ ─ ─ ─ ─ ┐
│          204: shear             │
└ ─ ─ ─ ─ ─ ─ ─ ─ ─ ─ ─ ─ ─ ─ ─ ─ ┘
                 │
                 ▼
┌ ─ ─ ─ ─ ─ ─ ─ ─ ─ ─ ─ ─ ─ ─ ─ ─ ┐
│        206: evaporate           │
└ ─ ─ ─ ─ ─ ─ ─ ─ ─ ─ ─ ─ ─ ─ ─ ─ ┘
                 │
                 ▼
┌ ─ ─ ─ ─ ─ ─ ─ ─ ─ ─ ─ ─ ─ ─ ─ ─ ┐
│          208: shear             │
└ ─ ─ ─ ─ ─ ─ ─ ─ ─ ─ ─ ─ ─ ─ ─ ─ ┘
                 │
                 ▼
┌─────────────────────────────────┐          ┌──────────────────────┐
│          210: hold              │◄────────►│     220: shear       │
└─────────────────────────────────┘          └──────────────────────┘
                 │
                 ▼
┌ ─ ─ ─ ─ ─ ─ ─ ─ ─ ─ ─ ─ ─ ─ ─ ─ ┐
│          212: shear             │
└ ─ ─ ─ ─ ─ ─ ─ ─ ─ ─ ─ ─ ─ ─ ─ ─ ┘
                 │
                 ▼
┌─────────────────────────────────┐
│        214: pre-heat            │
└─────────────────────────────────┘
                 │
                 ▼
┌ ─ ─ ─ ─ ─ ─ ─ ─ ─ ─ ─ ─ ─ ─ ─ ─ ┐
│          216: shear             │
└ ─ ─ ─ ─ ─ ─ ─ ─ ─ ─ ─ ─ ─ ─ ─ ─ ┘
                 │
                 ▼
┌─────────────────────────────────┐
│        218: spray dry           │
└─────────────────────────────────┘
```

# Fig. 2

Europäisches
Patentamt

European
Patent Office

Office européen
des brevets

**EUROPEAN SEARCH REPORT**

Application Number

EP 16 19 4860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE BIOSIS [Online] BIOSCIENCES INFORMATION SERVICE, PHILADELPHIA, PA, US; November 2012 (2012-11), AUGUSTIN MARY ANN ET AL: "High shear treatment of concentrates and drying conditions influence the solubility of milk protein concentrate powders", XP002766606, Database accession no. PREV201200770022 * abstract * ----- | 1-15 | INV. A23C1/03 A23C1/04 A23C1/12 A23C9/00 A23C1/00 |
| X | DATABASE FSTA [Online] INTERNATIONAL FOOD INFORMATION SERVICE (IFIS), FRANKFURT-MAIN, DE; O'CALLAGHAN D ET AL: "Modern process control techniques in the production of dried milk products - a review.", XP002766607, Database accession no. FS-2006-01-Pn0005 * abstract * ----- | 1-15 | |
| X | DATABASE FSTA [Online] INTERNATIONAL FOOD INFORMATION SERVICE (IFIS), FRANKFURT-MAIN, DE; SNOEREN T H M ET AL: "The effect of droplet size distribution on the properties of spray-dried skim-milk.", XP002766608, Database accession no. FS-1985-10-P-0062 * abstract * ----- -/-- | 1-15 | TECHNICAL FIELDS SEARCHED (IPC) A23C |

The present search report has been drawn up for all claims

| Place of search | Date of completion of the search | Examiner |
|---|---|---|
| Munich | 1 February 2017 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 19 4860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201649<br>Thomson Scientific, London, GB;<br>AN 2016-311958<br>XP002766609,<br>& CN 105 558 161 A (QINGHAI XUEFENG YAK DAIRY CO LTD) 11 May 2016 (2016-05-11)<br>* abstract * | 1-15 | |
| X | DATABASE WPI<br>Week 201632<br>Thomson Scientific, London, GB;<br>AN 2016-18538G<br>XP002766610,<br>& CN 105 379 843 A (CABIO BIOTECHNOLOGY WUHAN CO LTD) 9 March 2016 (2016-03-09)<br>* abstract * | 1-15 | |
| X | US 2016/113302 A1 (ZIMMER ARTUR G [US])<br>28 April 2016 (2016-04-28)<br>* claims 1-20 * | 1-15 | |
| X | EP 1 314 357 A1 (NESTLE SA [CH])<br>28 May 2003 (2003-05-28)<br>* claims 1-19 * | 1-15 | TECHNICAL FIELDS SEARCHED (IPC) |

The present search report has been drawn up for all claims

| Place of search | Date of completion of the search | Examiner |
|---|---|---|
| Munich | 1 February 2017 | Georgopoulos, N |

## ANNEX TO THE EUROPEAN SEARCH REPORT
## ON EUROPEAN PATENT APPLICATION NO.

EP 16 19 4860

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2017

| Patent document cited in search report | | | Publication date | Patent family member(s) | | | Publication date |
|---|---|---|---|---|---|---|---|
| CN 105558161 | A | | 11-05-2016 | NONE | | | |
| CN 105379843 | A | | 09-03-2016 | NONE | | | |
| US 2016113302 | A1 | | 28-04-2016 | US | 2016113302 | A1 | 28-04-2016 |
| | | | | WO | 2016069537 | A1 | 06-05-2016 |
| EP 1314357 | A1 | | 28-05-2003 | AR | 037416 | A1 | 10-11-2004 |
| | | | | AT | 362707 | T | 15-06-2007 |
| | | | | AU | 2002340931 | A1 | 10-06-2003 |
| | | | | BR | 0214355 | A | 26-10-2004 |
| | | | | CN | 1592580 | A | 09-03-2005 |
| | | | | DE | 60128572 | T2 | 07-02-2008 |
| | | | | EP | 1314357 | A1 | 28-05-2003 |
| | | | | ES | 2287065 | T3 | 16-12-2007 |
| | | | | HK | 1075582 | A1 | 21-12-2007 |
| | | | | MX | PA04004843 | A | 30-07-2004 |
| | | | | NZ | 533637 | A | 27-04-2007 |
| | | | | PT | 1314357 | E | 05-09-2007 |
| | | | | WO | 03043429 | A1 | 30-05-2003 |

EPO FORM P0459

For more details about this annex : see Official Journal of the European Patent Office, No. 12/82